# EUROPÄISCHE PATENTANMELDUNG

(11) **EP 3 228 888 A1**
(43) Veröffentlichungstag der Anmeldung: **11.10.2017**
(21) Anmeldenummer: 16164189.9
(22) Anmeldetag: 07.04.2016
(51) Int. Cl.: F16C 33/60, F16C 33/82, F16L 37/00, F16C 31/04, B03C 1/28

(54) **RILLENKUGELLAGER, MAGNETSTAB UND MAGNETABSCHEIDER**

(71) Anmelder: B&F Metallbautechnik GmbH, 27793 Wildeshausen (DE)
(72) Erfinder: Brand, Udo, 27793 Wildeshausen (DE)
(74) Vertreter: Gulde & Partner

(57) **Zusammenfassung**

Es werden ein Rillenkugellager, ein Magnetstab mit einem solchen Rillenkugellager und ein Magnetabscheider mit einem solchen Magnetstab beschrieben. Das Rillenkugellager (500) umfasst Kugeln und zwei Innenringteile, zwischen denen eine Rille gebildet ist, in der die Kugeln auf einer Kreisbahn gehalten werden. Die Innenringteile sind gegeneinander drehbar.

Der Magnetabscheider (100) umfasst eine Durchlassöffnung, durch die ein mit Magnetpartikeln (201) verunreinigtes, zu reinigendes Produkt (200) in einer Durchströmungsrichtung strömen kann. In der Durchlassöffnung sind Rohre (120) senkrecht zur Durchströmungsrichtung angeordnet. In den Rohren sind Magnetstäbe (300) so angeordnet, dass jeder entlang der Rohrachse (A) von einer ersten Position in eine zweite Position verschoben werden kann. Der jeweilige Magnetstab ist dabei in der ersten Position in der Durchlassöffnung angeordnet, so dass die Magnetpartikel am zugehörigen Roh abgeschieden werden, und in der zweiten Position außerhalb der Durchlassöffnung angeordnet. In der zweiten Position und/oder durch Verschieben zwischen der ersten und der zweiten Position kann der jeweilige Magnetstab von abgeschiedenen Magnetpartikeln befreit werden. Die Magnetstäbe umfassen das beschrieben Rillenkugellager und sind mit diesen in den Rohren gelagert.

## Beschreibung

Die Erfindung betrifft ein Rillenkugellager, einen Magnetstab mit einem solchen Rillenkugellager und einen Magnetabscheider mit einem solchen Magnetstab.

Magnetabscheider werden in vielen gewerblichen Anwendungsfeldern verwendet, um Eisen- und paramagnetische Verunreinigungen von Produkten und Produktionslinien zu entfernen, vor allem, jedoch nicht nur, in der Getreide, Lebensmittel- und chemischen Industrie. Verunreinigungen können beispielsweise Metallfragmente, Klammern und Nägel aus der Verpackung, Muttern und Bolzen aus Maschinen, Verschleiß von Reibungsteilen, magnetischen Stein und / oder Rost umfassen.

Magnetabscheider umfassen eine Durchlassöffnung, durch die ein zu reinigendes Produkt in einer Durchströmungsrichtung strömen kann. In der Durchlassöffnung sind Rohre senkrecht zur Durchströmungsrichtung angeordnet. In den Rohren sind Magnetstäbe so angeordnet, dass jeder entlang der Rohrachse von einer ersten Position in eine zweite Position verschoben werden kann. Der jeweilige Magnetstab ist dabei in der ersten Position in der Durchlassöffnung und in der zweiten Position außerhalb der Durchlassöffnung angeordnet. In der zweiten Position oder durch Überführen von der ersten in die zweite Position kann der jeweilige Magnetstab von abgeschiedenen Magnetpartikeln befreit werden. Dadurch ist es möglich, aus einem Produktstrom mit einigen der Magnetstäbe magnetische Partikel abzuscheiden und gleichzeitig die anderen Magnetstäbe von abgeschiedenen Magnetpartikeln zu befreien, so dass ein von der Magnetpartikelbefreiung ununterbrochener und dennoch gereinigter Produktstrom möglich bleibt.

Da sich die Magnetstäbe in den Rohren gegenseitig anziehen, treten bei Verschieben der Magnetstäbe in den Rohren senkrecht zur Verschiebung wirkende Kräfte auf. Dies kann zu einem Verkanten der Magnetstäbe in den Rohren führen, welches das Verschieben be- oder verhindert.

Erfindungsgemäß wird ein Rillenkugellager nach Anspruch 1 vorgestellt. Das Rillenkugellager umfasst Kugeln und zwei Innenringteile, zwischen denen eine Rille gebildet ist, in der die Kugeln so auf einer Kreisbahn gehalten werden, dass radiale Außenpunkte der Kugeln von einer Achse des Rillenkugellagers mit einem Abstand D'/2 angeordnet sind, dadurch gekennzeichnet dass die Innenringteile gegeneinander drehbar sind. Die Innenringteile haben einen Außendurchmesser D < D'.

In einer bevorzugten Ausführungsform ist jedes Innenringteil als rotationssymmetrischer Körper mit axialem Durchgangsloch ausgebildet wobei das Durchgangsloch des Innenringteils einen geringeren Durchmesser als das Durchgangsloch des Innenringteils aufweist.

Eines der Innenringteile kann einen sich axial vorspringenden Gleitvorsprung aufweisen, an dessen einem axialen Ende sich ein radial nach außen vorspringender Kragen mit einer Kragenbreite anschließt und an dessen anderem axialen Ende sich ein ringförmiges Teilrillenelement anschließt, welches eine konkave Teilrille an einer Außenoberfläche umfasst, wobei die konkave Teilrille in Richtung des axialen Endes geöffnet ist.

Das Durchgangsloch des einen Innenringteils kann am dem Gleitvorsprung abgewandten axialen Ende des Teilrillenelements gefast sein.

Das andere der Innenringteile kann eine weitere konkave Halbrille umfassen, die sich in Richtung eines axialen Endes des anderen Innenringteils öffnet, wobei das Durchgangsloch des anderen Innenringteils am anderen axialen Ende gestuft ist.

Die Stufe kann mit einem Stufendurchmesser und einer Stufentiefe ausgebildet sein, wobei ein zwischen der Stufe und dem axialen Ende des anderen Innenringteils verbleibender Teil des Durchgangslochs eine Teillochlänge und einen minimalen Durchmesser haben kann. Dabei können Stufendurchmesser und minimaler Durchmesser so passend zu Außendurchmessern des Kragens und des Gleitvorsprungs und Stufentiefe und Teillochlänge so passend zur Kragenbreite und axialen Länge des Gleitvorsprungs sein, dass soviel Spiel zwischen den Innenringteile verbleibt, dass sich die Innenringteile gegeneinander drehen lassen.

Erfindungsgemäß wird auch ein Magnetstab nach Anspruch 7 vorgestellt. Der Magnetstab umfasst mindestens ein erfindungsgemäßes Rillenkugellager. Das Rillenkugellager ist so am Magnetstab angeordnet dass Achsen des oder der Rillenkugellager mit einer Achse des Magnetstabs zusammenfallen, wobei ein Außerdurchmesser des Magnetstabs kleiner als D' ist.

Erfindungsgemäß wird schließlich auch ein Magnetabscheider gemäß Anspruch 8 vorgestellt. Der Magnetabscheider umfasst eine Durchlassöffnung, durch die ein mit Magnetpartikeln verunreinigtes Produkt in einer Durchströmungsrichtung strömen kann, in der Durchlassöffnung senkrecht zur Durchströmungsrichtung angeordnete Rohre mit Rohrachsen, in den Rohren entlang der jeweiligen Rohrachse von einer ersten Position in eine zweite Position individuell verschiebbar angeordnete, erfindungsgemäße Magnetstäbe, die mit den Rillenkugellagern in den Rohren gelagert sind, wobei der jeweilige Magnetstab in der ersten Position in der Durchlassöffnung angeordnet ist, so dass die Magnetpartikel am zugehörigen Rohr abgeschieden werden, und in der zweiten Position außerhalb der Durchlassöffnung angeordnet ist und in der zweiten Position, und/oder durch Verschieben zwischen der ersten und der zweiten Position, von den abgeschiedenen Magnetpartikeln befreit werden kann.

In einer bevorzugten Ausführungsform umfasst der Magnetabscheider weiterhin einen Abstreifkonus, der eine der Durchlassöffnung zugewandte Seite und eine von der Durchlassöffnung abgewandte Seite aufweist, die an einer Kammkante aneinander und an Rohrkanten an das Rohr, wobei die zugewandte Seite an der Rohrkante so geringe Steigung aufweist, dass bei Verschieben des Magnetstabs von der ersten in die zweite Position abgeschiedene Magnetpartikel auf dem Abstreifkonus mitgeführt werden, wobei eine Steigung der zugewandten Seite zur Kammkante hin zunimmt und an der Kammkante maximal ist.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen schematisch und beispielhaft:
- Figur 1: einen Magnetabscheider gemäß einer Ausgestaltung der Erfindung mit einem Magnetstab in einer ersten Position
- Figur 2: den Magnetabscheider gemäß der Ausgestaltung der Erfindung mit dem Magnetstab in einer zweiten Position
- Figur 3: einen Magnetstab gemäß einer Ausgestaltung der Erfindung
- Figuren 4-6: ein Rillenkugellager gemäß einer Ausgestaltung der Erfindung und
- Figuren 7: einen Abstreifkonus gemäß einer Ausgestaltung der Erfindung.

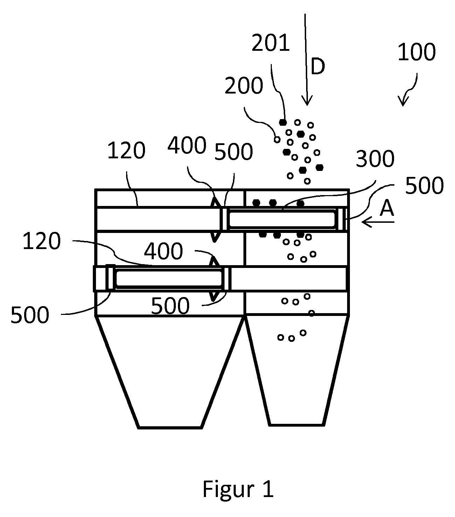

Figur 1 zeigt einen Magnetabscheider 100. Der Magnetabscheider umfasst eine Durchlassöffnung, durch die ein zu reinigendes Produkt 200, welches mit Magnetpartikeln 201 verunreinigt ist, in einer Durchströmungsrichtung R strömen kann. In der Durchlassöffnung sind Rohre 120 senkrecht zur Durchströmungsrichtung R angeordnet. In den Rohren 120 sind Magnetstäbe 300 angeordnet. Die Magnetstäbe 300 sind so in den Rohren 120 angeordnet, dass jeder entlang der Rohrachse A von einer ersten Position in eine zweite Position verschoben werden kann. Der jeweilige Magnetstab 300 ist dabei in der ersten Position in der Durchlassöffnung und in der zweiten Position außerhalb der Durchlassöffnung angeordnet.

Zwischen Außenmantelflächen der Rohre 120 und Rohröffnungen in einem Gehäuse, welches die Durchlassöffnung umschließt, verbleibt ein ringförmiger Spalt, durch den abgeschiedene Magnetpartikel 201 durch Verschieben des Magnetstabs von der ersten Position in die zweite Position aus der Durchlassöffnung und damit aus dem strömenden Produkt herausgeführt werden können.

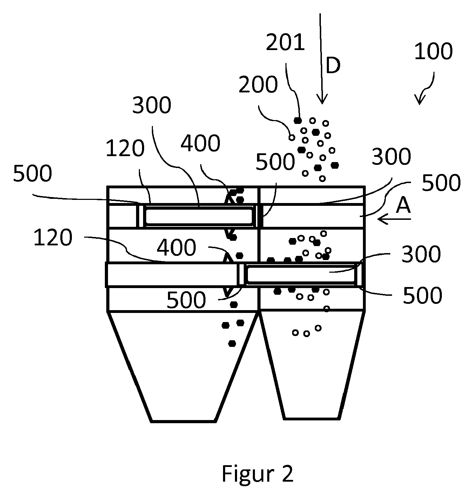

Figur 1 zeigt einen oberen Magnetstab 300 in der ersten Position und einen unteren Magnetstab 300 in der zweiten Position. In Figur 2 ist der untere Magnetstab 300 in der ersten Position und der obere Magnetstab 300 wird gerade in die zweite Position verschoben. Im gezeigten Ausführungsbeispiel wird der jeweilige Magnetstab 300 durch Verschieben von der ersten in die zweite Position von abgeschiedenen Magnetpartikeln befreit werden. In weiteren Ausführungsbeispielen erfolgt die Befreiung ganz oder teilweise in der zweiten Position. In noch weiteren Ausführungsbeispielen erfolgt die Befreiung ganz oder teilweise durch Verschieben von der zweiten in die erste Position.

Im dargestellten Beispiel kann der jeweilige Magnetstab 300 durch Überführen von der ersten in die zweite Position von abgeschiedenen Magnetpartikeln 201 befreit werden. Dazu ist auf dem Rohr 120 in einem Bereich, der nicht innerhalb der Durchlassöffnung liegt, ein Abstreifkonus 400 angeordnet.

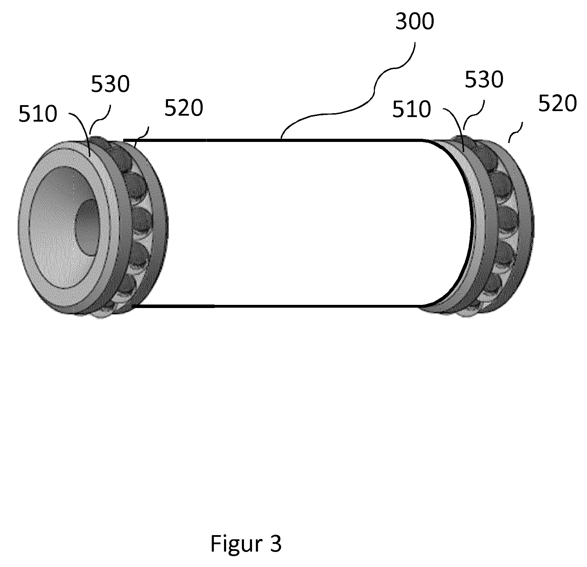

Die Magnetstäbe 300 umfassen an ihren Enden je ein Rillenkugellager 500 und sind mit diesen in den Rohren 120 gelagert. Figur 3 zeigt einen der Magnetstäbe 300 gemäß einer beispielhaften Ausgestaltung der Erfindung. Der Magnetstab hat einen Durchmesser D. An den Stirnseiten des gezeigten Magnetstabs 300 ist jeweils ein Rillenkugellager 500 angeordnet.

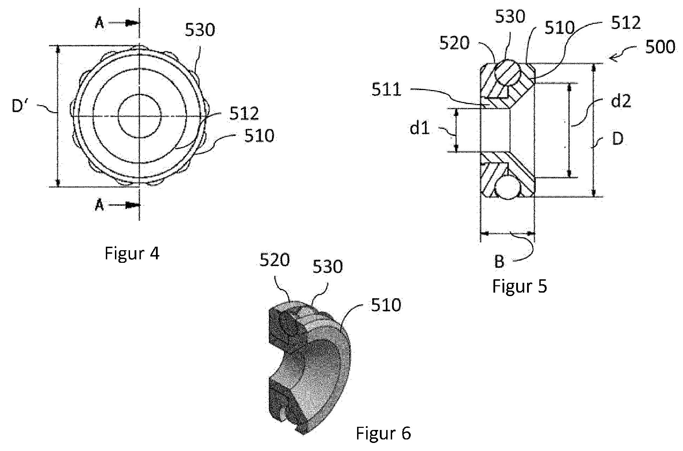

Figuren 4 - 6 zeigen eines der Rillenkugellager 500 gemäß einer beispielhaften Ausgestaltung der Erfindung in Aufsicht und Schnitt. Das Rillenkugellager 500 umfasst zwei Innenringteile 510, 520. Zwischen den Innenringteilen 510, 520 ist eine radiale Rille mit teilkreisförmigem Profil ausgebildet. In der Rille werden die Kugeln 530 auf einer Kreisbahn gehalten. Die Innenringteile 510, 520 haben den Außendurchmesser D. Radiale Außenpunkte der Kugeln sind von einer Achse des Rillenkugellager 500 mit einem Abstand D'/2 angeordnet, wobei D' > D ist. Die Innenringteile 510, 520 sind gegeneinander drehbar. Dafür ist jedes Innenringteil 510, 520 als rotationssymmetrischer Körper mit axialem Durchgangsloch ausgebildet. Das Durchgangsloch des Innenringteils 510 weist dabei einen geringeren Durchmesser d1 als das Durchgangsloch des Innenringteils 520 auf. Das Innenringteil 510 weist einen axial vorspringenden Gleitvorsprung 511 auf. An einem axialen Ende des Gleitvorsprungs 511 schließt ein radial nach außen vorspringender Kragen mit einer Kragenbreite an. Am anderen axialen Ende des Gleitvorsprungs 511 schließt ein ringförmiges Teilrillenelement 512 des Innenringteils 510 an. Das Teilrillenelement 512 umfasst eine konkave Teilrille an der Außenoberfläche. Die konkave Teilrille ist in Richtung des axialen Endes geöffnet. Das Durchgangsloch des Innenringteils 510 ist an dem anderen axialen Ende gefast, wobei d2 ein Außendurchmesser des gefasten Durchgangslochs am anderen axialen Ende ist.

Das Innenringteil 520 umfasst ebenfalls eine konkave Halbrille, die sich in Richtung eines axialen Endes des Innenringteils 520 öffnet. Das Durchgangsloch des Innenringteils 520 ist am anderen axialen Ende gestuft. Alternativ kann das Innenringteil 520 eine radiale Nut im Durchgangsloch umfassen. Nut beziehungsweise Stufe ist dabei mit einem Nutdurchmesser und einer Nutbreite ausgebildet. Der verbleibende Teil des Durchgangslochs zwischen Nut beziehungsweise Stufe und dem axialen Ende hat eine Teillochlänge.

Nutdurchmesser und minimaler Durchmesser sind passend zu Außendurchmessern des Kragens und des Gleitvorsprungs 511. Nutbreite und Teillochlänge sind passend zur Kragenbreite und axialer Länge des Gleitvorsprungs 511. Passend bedeutet dabei, dass soviel Spiel zwischen den Innenringteilen 510, 520 verbleibt, dass sich die Innenringteile 510, 520 gegeneinander drehen lassen.

Das Rillenkugellager 500 ist so am Magnetstab 300 angeordnet, dass Achsen des Rillenkugellagers 500 und des Magnetstabs 300 zusammenfallen.

Das erfindungsgemäße Rillenkugellager ist insbesondere zur verschiebbaren Lagerung in einem Rohr geeignet. Ein beispielhaftes Anwendungsgebiet ist die verschiebbare Lagerung eines in einem in einem Magnetfeld angeordneten Stabmagneten.

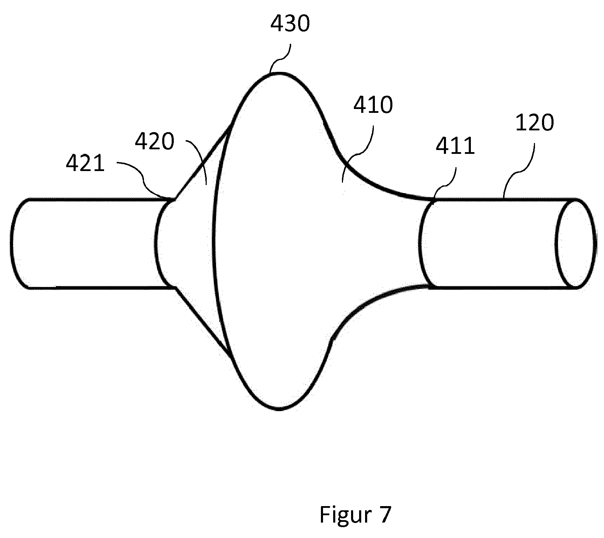

Figur 7 zeigt den Abstreifkonus 400 im Detail. Die dargestellten Proportionen sind beispielhaft und nicht repräsentativ.

Der Abstreifkonus 400 hat eine der Durchlassöffnung zugewandte Seite 410 und eine von der Durchlassöffnung abgewandte Seite 420, die an einer Kammkante 430 aneinander grenzen. Die Seiten 410, 420 grenzen an Rohrkanten 411, 421 an das Rohr 120.

Die zugewandte Seite 410 weist an der Rohrkante 411 eine so geringe Steigung auf, dass bei Verschieben des Magnetstabs 300 von der ersten in die zweite Position abgeschiedene Magnetpartikel 201 auf dem Abstreifkonus 400 mitgeführt werden. Die geringe Steigung beträgt bevorzugt weniger als 45°, entsprechend einem Viertelkreis, noch bevorzugt weniger als 30°. Die Kammkante 430 weist eine so große Höhe auf, dass bis zur Kammkante 430 mitgeführte Magnetpartikel 201 nicht mehr vom Magnetfeld gehalten werden und schwerkraftbedingt abfallen. Die Steigung der Seite 410 nimmt zur Kammkante 430 hin zu und weist an der Kammkante 430 eine maximale Steigung auf. Die maximale Steigung beträgt bevorzugt mehr als 45°, entsprechend einem Viertelkreis, noch bevorzugt mehr als 60°.

Die abgewandte Seite 420 weist an der Rohrkante 421 eine so hohe Steigung auf, dass bei Verschieben des Magnetstabs 300 von der zweiten in die erste Position am Rohr anhaftende Magnetpartikel nicht auf dem Abstreifkonus 400 mitgeführt werden. Die Steigung der Seite 420 ist im dargestellten Beispiel konstant. Dies ist jedoch optional.

### Bezugszeichenliste

- 100: Magnetabscheider
- 120: Rohr
- 200: zu reinigendes Material
- 201: magnetische Verunreinigungen (Magnetpartikel)
- 300: Stabmagnet
- 400: Abstreifkonus
- 410: Durchströmungsöffnung zugewandte Seite
- 411: Rohrkante der zugewandten Seite
- 420: Durchströmungsöffnung abgewandte Seite
- 421: Rohrkante der abgewandten Seite
- 430: Kammkante
- 500: Rillenkugellager
- 510: Innenringteil
- 511: Gleitvorsprung
- 512: Teilrillenelement
- 520: weiteres Innenringteil
- 530: Kugel
- R: Durchströmungsrichtung
- A: Achse
- D: Außenradius der Innenringteile
- D': Außenradius des Rillenkugellagers
- d1: Durchmesser des Durchgangslochs im Innenringteil 510
- d2: Außendurchmesser der Fase

## Patentansprüche

1. Rillenkugellager (500) umfassend Kugeln (530) und zwei Innenringteile (510, 520), zwischen denen eine Rille gebildet ist, in der die Kugeln (530) so auf einer Kreisbahn gehalten werden, dass radiale Außenpunkte der Kugeln von einer Achse des Rillenkugellager (500) mit einem Abstand D'/2 angeordnet sind, wobei die Innenringteile (510, 520) einen Außendurchmesser D < D' aufweisen, **dadurch gekennzeichnet dass** die Innenringteile (510, 520) gegeneinander drehbar sind.

2. Rillenkugellager (500) gemäß Anspruch 1, wobei jedes Innenringteil (510, 520) als rotationssymmetrischer Körper mit axialem Durchgangsloch ausgebildet und das Durchgangsloch des Innenringteils (510) eine geringeren Durchmesser als das Durchgangsloch des Innenringteils (520) aufweist.

3. Rillenkugellager (500) gemäß einem der vorangehenden Ansprüche, wobei eines der Innenringteile (510) einen axial vorspringenden Gleitvorsprung (511) aufweist, an dessen einem axialen Ende sich ein radial nach außen vorspringende Kragen mit einer Kragenbreite anschließt und an dessen anderem axialen Ende sich ein ringförmiges Teilrillenelement (512) anschließt, welches eine konkave Teilrille an einer Außenoberfläche umfasst, wobei die konkave Teilrille in Richtung des axialen Endes geöffnet ist.

4. Rillenkugellager (500) gemäß einem der vorangehenden Ansprüche, wobei das Durchgangsloch des einen Innenringteils (510) am dem Gleitvorsprung (511) abgewandten axialen Ende des Teilrillenelements (512) gefast ist.

5. Rillenkugellager (500) gemäß einem der vorangehenden Ansprüche, wobei das andere der Innenringteile (520) eine weitere konkave Halbrille umfasst, die sich in Richtung eines axialen Endes des anderen Innenringteils (520) öffnet, wobei das Durchgangsloch des anderen Innenringteils (520) am anderen axialen Ende gestuft ist.

6. Rillenkugellager (500) gemäß einem der vorangehenden Ansprüche, wobei die Stufe mit einem Stufendurchmesser und einer Stufentiefe ausgebildet, wobei ein zwischen der Stufe und dem axialen Ende des anderen Innenringteils (520) verbleibender Teil des Durchgangslochs eine Teillochlänge und einen minimalen Durchmesser hat und wobei Nutdurchmesser und minimaler Durchmesser so passend zu Außendurchmessern des Kragens und des Gleitvorsprungs (511) und Stufentiefe und Teillochlänge so passend zur Kragenbreite und axialen Länge des Gleitvorsprungs (511) sind, dass soviel Spiel zwischen den Innenringteile 510, 520 verbleibt, dass sich die Innenringteile 510, 520 gegeneinander drehen lassen.

7. Magnetstab (300) mit mindestens einem Rillenkugellager (500) nach einem der vorangehenden Ansprüche, wobei das Rillenkugellager (500) so am Magnetstab (300) angeordnet ist, dass Achsen des oder der Rillenkugellager (500) mit einer Achse des Magnetstabs (300) zusammenfallen und ein Außerdurchmesser des Magnetstabs (300) kleiner als D' ist.

8. Magnetabscheider (100) umfassend eine Durchlassöffnung, durch die ein mit Magnetpartikeln (201) verunreinigtes Produkt (200) in einer Durchströmungsrichtung (R) strömen kann, in der Durchlassöffnung senkrecht zur Durchströmungsrichtung (R) angeordnete Rohre (120) mit Rohrachsen (A), in den Rohren (120) entlang der jeweiligen Rohrachse (A) von einer ersten Position in eine zweite Position individuell verschiebbar angeordnete Magnetstäbe (300), die gemäß Anspruch 7 ausgebildet sind und mit dem Rillenkugellager (500) in den Rohren (120) gelagert sind, wobei der jeweilige Magnetstab (300) in der ersten Position in der Durchlassöffnung angeordnet ist, so dass die Magnetpartikel (201) am zugehörigen Rohr (120) abgeschieden werden, und in der zweiten Position außerhalb der Durchlassöffnung angeordnet ist und in der zweiten Position, und/oder durch Verschieben zwischen der ersten und der zweiten Position, von den abgeschiedenen Magnetpartikeln (201) befreit werden kann.

9. Magnetabscheider (100) nach Anspruch 8 weiterhin umfassend einen Abstreifkonus (400), der auf dem Rohr (120) in einem Bereich, der nicht innerhalb der Durchlassöffnung liegt, angeordnet ist und eine der Durchlassöffnung zugewandte Seite (410) und eine von der Durchlassöffnung abgewandte Seite (420) aufweist, die an einer Kammkante (430) aneinander und an Rohrkanten (411, 421) an das Rohr (120) angrenzen, wobei die zugewandte Seite (410) an der Rohrkante (411) eine so geringe Steigung aufweist, dass bei Verschieben des Magnetstabs (300) von der ersten in die zweite Position abgeschiedene Magnetpartikel (201) auf dem Abstreifkonus (400) mitgeführt werden, wobei eine Steigung der zugewandten Seite (410) zur Kammkante (430) hin zunimmt und an der Kammkante (430) maximal ist.
